# FASCICULE DE BREVET EUROPEEN

(11) **EP 2 585 725 B1**
(45) Date de publication et mention de la délivrance du brevet: **18.03.2020**
(21) Numéro de dépôt: 11738016.2
(22) Date de dépôt: 24.06.2011
(51) Int. Cl.: F16B 39/24, F16B 39/282

(54) **RONDELLE DE BLOCAGE A DOUBLE EFFET**
DOPPELT WIRKENDE SICHERUNGSUNTERLEGSCHEIBE
DOUBLE ACTING LOCKING WASHER

(30) Priorité: 25.06.2010 FR 1055098
(43) Date de publication de la demande: 01.05.2013
(73) Titulaire: Nord-Lock International AB, 401 25 Gothenburg (SE)
(72) Inventeur: DELCHER, Christophe, F-42490 Fraisses (FR)
(74) Mandataire: Zacco Sweden AB
(86) Numéro de dépôt international: PCT/FR2011/051459
(87) Numéro de publication internationale: WO 2011/161387

(56) Documents cités:
- WO-A1-01/66964
- FR-A- 767 903
- GB-A- 514 923
- JP-A- S 514 446
- JP-U- S6 297 314
- US-A- 5 203 656

## Description

La présente invention se rapporte à une rondelle de blocage permettant de maintenir bloqué en rotation un système vis/écrou après qu'il a été serré.

Des rondelles de blocage connues sont par exemple formées d'un anneau tronqué élastique sensiblement déformé de manière à ce que les deux extrémités libres de l'anneau forment des becs. L'anneau est alors destiné à venir en prise, par exemple entre un élément d'appui et un écrou, tandis qu'une tige de vis s'étend en saillie de l'élément d'appui et à travers l'anneau élastique. Lors du serrage de l'écrou, l'anneau élastique est aplati entre l'élément d'appui et l'écrou tandis que les becs de l'anneau viennent s'y incruster respectivement de manière à former un frein.

Ces rondelles de blocage sont relativement simples mais leur efficacité est modeste.

D'autre rondelles de blocage plus complexes, comprennent deux couronnes appliquées coaxialement l'une contre l'autre et sont adaptées à venir en prise entre l'élément d'appui et l'écrou. Elles présentent chacune une face d'applique et une face d'appui opposée nervurée. La face d'applique présente elle, des dents radiales asymétriques et ces dents radiales asymétriques présentent, d'une part une crête et un fond de dent espacé angulairement de la crête d'un angle sensiblement inférieur à 60°, et d'autre part deux flancs opposés. L'un des flancs est sensiblement incliné par rapport au plan moyen défini par la couronne, et il s'étend angulairement entre ladite crête et ledit fond de dent. Il est destiné à former un flanc de glissement. L'autre flanc est sensiblement perpendiculaire au flanc incliné de la dent suivante et il constitue un flanc d'arrêt. Les faces d'applique desdites couronnes sont alors destinées à être appliquées l'une contre l'autre, de manière à ce que, d'une part les flancs inclinés de glissement viennent respectivement en contact les uns contre les autres, et d'autre part, les flancs d'arrêt viennent respectivement en butée les uns contre les autres.

Aussi, lorsque l'écrou est vissé, la rondelle de blocage est prise en étau entre l'élément d'appui et l'écrou et les faces d'applique son entraînées axialement l'une contre l'autre à force sous pression. En revanche, lorsque l'écrou tend à se dévisser, il entraîne en rotation la couronne contre laquelle il s'appuie, et partant, les flancs de glissement de cette couronne sont entraînés en glissement contre les flancs de glissement de l'autre couronne en formant rampe. De la sorte, lesdites couronnes s'écartent axialement l'une de l'autre et la tension axiale qui s'exerce dans le système vis/écrou s'accroît de façon importante. De ce fait, les forces de frottement naissant dans le système vis/écrou augmentent considérablement et provoquent de blocage en rotation de l'écrou. Plus concrètement, le flanc de glissement est incliné par rapport à l'axe du système vis/écrou selon un angle supérieur à celui de l'angle d'hélice dudit système. Aussi, dès lors que l'écrou entraîne en rotation la couronne lorsqu'il se desserre, cette dernière est entraînée axialement contre lui, et par effet de coin vient le bloquer.

Ce type de rondelle, qui est notamment décrit dans le document EP0131556, présente toutefois des inconvénients.

En effet, ce type de rondelle est efficient, dans la mesure où la couronne vient en prise avec l'écrou lorsqu'il se desserre et ce en toutes circonstances. Toutefois, au fil du temps et suivant les conditions de mise en œuvre, un ensemble vis/écrou incluant un élément d'appui, a tendance à se desserrer. Ce phénomène est soit provoqué par un glissement de l'écrou contre la couronne, soit par un fluage et/ou une relaxation des éléments subissant l'effort de serrage. Dans ces deux cas, les deux couronnes ne sont pas entraînées en rotation l'une par rapport à l'autre, et la tension axiale ne s'accroît pas mais au contraire, chute. Par conséquent, le blocage de l'écrou est inopérant.

Le document JP 62 97314 U montre une autre rondelle de blocage.

Aussi, un problème qui se pose et que vise à résoudre la présente invention, est de fournir une rondelle de blocage qui puisse être efficiente en toutes circonstances, quelles que soient les conditions de mise en place et d'environnement.

Dans ce but, la présente invention propose une rondelle de blocage destinée à être comprimée axialement entre un élément d'appui et un élément vissable, ledit élément vissable étant relié audit élément d'appui par une tige apte à traverser ladite rondelle de blocage, ladite rondelle de blocage comprenant deux couronnes présentant chacune une portée d'appui dépourvue des stries radiales et une face d'applique, ladite face d'applique présentant une pluralité de dents radiales asymétriques, chacune desdites dents radiales asymétriques présentant, d'une part une crête et un fond de dent espacé angulairement de ladite crête, et d'autre part un flanc de glissement incliné étendu angulairement entre ladite crête et ledit fond de dent, les faces d'applique desdites couronnes étant aptes à être appliquées l'une contre l'autre, tandis que lesdits flancs de glissement viennent respectivement en contact les uns contre les autres, lesdites couronnes appliquées l'une contre l'autre et maintenues comprimées sous pression axiale entre ledit élément vissable et ledit élément d'appui étant aptes à venir respectivement en prise en rotation avec ledit élément vissable et ledit élément d'appui, lorsque ledit élément vissable se dévisse, de manière à entraîner en rotation lesdites couronnes l'une par rapport à l'autre, tandis que lesdits flancs sont respectivement entraînés en glissement les uns contre les autres en formant rampe de manière à écarter axialement lesdites couronnes l'une de l'autre pour provoquer le blocage en rotation dudit élément vissable. Selon l'invention, la rondelle de blocage présente une forme tronconique, et en elle est élastiquement déformable de façon à pouvoir être déformée à plat en formant ressort entre ledit élément d'appui et ledit élément vissable de manière à maintenir ladite pression axiale sensiblement constante, par quoi lesdites couronnes sont aptes à être entraînées en rotation l'une par rapport à l'autre lorsque ledit élément d'appui et ledit élément vissable s'écartent axialement l'un de l'autre.

Ainsi, une caractéristique de l'invention réside dans la mise en œuvre de deux couronnes coniques réalisées dans un matériau élastiquement déformable et engagées l'une dans l'autre. De la sorte, lorsque les deux couronnes sont déformées à plat entre l'élément d'appui et l'élément vissable, par exemple un écrou, elles exercent respectivement une pression axiale contre l'élément d'appui et contre l'élément vissable. Lorsque pour une quelconque raison, l'écrou s'écarte axialement de l'élément d'appui, alors les deux couronnes par effet ressorts tendent à revenir vers leur forme initiale conique et continue d'exercer respectivement ladite pression axiale contre l'écrou et l'élément d'appui. Par conséquent, lorsque l'écrou tend à se desserrer dans cette position écartée de l'élément d'appui, les couronnes demeurent en prise en rotation respectivement avec l'écrou et l'élément d'appui. Aussi, elles sont entraînées en rotation l'une par rapport à l'autre et l'effet de blocage se produit. Ainsi qu'on l'expliquera plus en détail dans la suite de la description, l'angle de plus grande pente des flancs par rapport au plan moyen de la rondelle est supérieur à l'angle d'hélice de l'élément vissable de manière à produire ce blocage.

Pour que les couronnes puissent venir en prise respectivement avec l'écrou et avec la portion d'appui, il est nécessaire que les forces de frottement entre ces éléments soient importantes et par conséquent que la pression axiale le soit également. Dans une certaine mesure, les portées d'appui des couronnes opposées à leur face d'applique, demeurent en contact respectivement avec l'élément d'appui et l'élément vissable sur une part importante de leur surface. Grâce à la conicité de la rondelle de blocage objet de l'invention, cette pression axiale demeure et son efficacité est constante dans le temps. Par conséquent, il n'est nul besoin de prévoir des stries radiales sur les portées d'appui des couronnes qui tendent à endommager respectivement l'écrou, mais aussi et surtout, l'élément d'appui en venant s'y incruster. Il n'est nul besoin non plus de prévoir des moyens spécifiques complémentaires pour que les couronnes viennent en prise respectivement avec l'élément vissable et l'élément d'appui. Ainsi, la rondelle de blocage objet de l'invention est-elle apte à être mise en œuvre avec des éléments vissables standards.

Par ailleurs, on observera que les couronnes sont conçues pour être déformées à plat, ce qui permet de réduire significativement la longueur des tiges de vis par rapport à celles utilisées avec des rondelles de blocage plus complexes et plus épaisses. De plus, les couronnes étant maintenues déformées à plat entre l'élément d'appui et l'élément vissable, les forces de frottement et donc d'adhérence entre les portées d'appui et respectivement, l'élément d'appui et l'élément vissable, sont, pour une tension donnée dans la tige, maximales, ce qui confère une meilleure tenue au glissement. S'agissant plus précisément du couple de frottement, il est alors fonction des forces de frottement et de la distance à laquelle elles s'appliquent par rapport à l'axe de rotation. Si la rondelle de blocage de forme tronconique n'était pas déformée à plat, le couple de frottement pourrait alors être compensé au moins partiellement en augmentant le diamètre de la rondelle et/ou en prévoyant des moyens de blocage approprié. Grâce à l'invention, il n'est alors nullement nécessaire d'augmenter le diamètre de la rondelle de blocage pour que la portée d'appui de la couronne en contact avec l'élément d'appui notamment, soit plus éloignée de l'axe de l'élément vissable de manière à augmenter précisément le couple de frottement. Aussi, les rondelles de blocage objet de l'invention, requièrent-elles moins de matières et sont donc plus économiques.

De plus, les couronnes étant maintenues déformées à plat entre l'élément d'appui et l'élément vissable, permet aussi de limiter l'amplitude des sollicitations mécaniques au niveau de la tige filetée précontrainte, ce qui lui confère une tenue à la fatigue très nettement améliorée.

Avantageusement, lesdites dents radiales asymétriques des faces d'applique de chacune desdites couronnes présentent un profil identique. Cette configuration permet une meilleure coopération des flancs de glissement les uns contre les autres et par conséquent atténue les forces de frottement entre les faces d'applique, ce qui est particulièrement recherché ainsi qu'on l'expliquera ci-après.

Par ailleurs, chacune desdites dents radiales asymétriques présente en outre, un flanc d'arrêt opposé audit flanc de glissement par rapport à ladite crête, et lesdits flancs d'arrêt desdites dents radiales asymétriques desdites faces d'applique viennent respectivement en contact les uns contre les autres lorsque lesdites faces d'applique desdites couronnes sont appliquées l'une contre l'autre. Ainsi, lorsque l'élément vissable est vissé à force pour venir prendre en étau les deux couronnes de la rondelle de blocage, ces dernières sont maintenues bloquées en rotation, grâce aux flancs d'arrêt, et l'élément vissable est entraîné en frottement glissant contre la rondelle de blocage si celle-ci demeure en prise avec l'élément d'appui. Bien évidemment, si elle vient en prise avec l'élément vissable elle est alors elle-même entraînée en frottement glissant contre l'élément d'appui.

Lesdits flancs d'arrêt et lesdits flancs de glissement se rejoignent selon une ligne d'intersection qui s'étend radialement. Aussi, les faces d'applique des couronnes coopèrent parfaitement de telle sorte qu'il n'y a aucun espace libre entre les deux couronnes appliquées l'une contre l'autre. On obtient de la sorte un une rondelle de blocage d'un seul bloc et donc résistante aux forces de compression.

Selon l'invention, lesdites couronnes présentant des plans axiaux coupant les dents radiales asymétriques selon ladite crête, lesdits flancs d'arrêt sont sensiblement inclinés par rapport auxdits plans axiaux ; par exemple de quelques degrés. De la sorte, les flancs d'arrêt de l'une des couronnes venant en butée contre les flancs d'arrêt de l'autre couronne, il n'existe aucun risque de glissement des flancs d'arrêt les uns contre les autres durant le serrage de l'élément vissable. Durant cette opération, les couronnes demeurent donc solidaires en rotation l'une de l'autre.

Selon l'invention, lesdites couronnes présentant des plans axiaux coupant les dents radiales asymétriques selon ladite crête et préférentiellement des plans perpendiculaires coupant lesdits plans axiaux perpendiculairement selon ladite crête, selon l'invention, lesdits flancs de glissement sont sensiblement inclinés par rapport auxdits plans perpendiculaires. Par exemple de quelques degrés et d'un angle supérieur à l'angle d'hélice de l'élément vissable pris dans le même référentiel.

De plus, la face d'applique de chacune desdites couronnes présente entre huit et trente dents radiales asymétriques. Pour certaines applications, les couronnes présentent entre dix et vingt dents radiales asymétriques. Elle en présente par exemple quinze. Ainsi, le mouvement axiale des deux couronnes l'une par rapport à l'autre est parfaitement assuré et les efforts sont bien répartis dans le pourtour des couronnes, eu égard à leur épaisseur. En outre, l'une desdites couronnes présente une face d'applique convexe, tandis que l'autre desdites couronnes présente une face d'applique concave. Ainsi, la couronne présentant la face d'applique convexe est-elle engagée dans la couronne présentant la face d'applique concave. De la sorte, la rondelle de blocage est constituées des deux couronnes engagées l'une dans l'autre en formant un seul élément conique, avant d'être déformée à plat. Aussi, les dents radiales des couronnes coopèrent respectivement les unes avec les autres, de sorte que les flancs de glissement des dents sont respectivement en contact les uns avec les autres, avant la déformation à plat des deux couronnes. Une telle caractéristique permet d'éviter le mouvement des couronnes l'une par rapport à l'autre durant le serrage de l'élément vissable, et partant, le mouvement des_dents de l'une des couronnes par rapport aux dents de l'autre des couronnes.

Avantageusement, les faces d'applique sont aptes à venir en contact continu sur toute leur surface, ce qui permet de maintenir les couronnes appariées moyennant la mise en œuvre d'un adhésif par exemple, sur les faces d'applique. Une telle caractéristique facilite la mise en œuvre et également le conditionnement.

Par ailleurs, lesdites couronnes sont selon un mode de mise en œuvre particulièrement avantageux formées dans un acier ressort ; par exemple un acier au silicium. Selon l'invention, lesdites faces d'applique sont traitées pour diminuer les forces de frottement entre lesdits flancs de glissement. Le traitement des faces d'applique, s'entend ici, aussi bien d'un traitement physique ou chimique que de la mise en œuvre d'un revêtement. Au surplus, les portées d'appui opposées aux faces d'applique des couronnes sont avantageusement traitées ou enduites pour augmenter les forces de frottement entre elles et respectivement l'écrou et l'élément d'appui. De la sorte, plus encore, on peut s'affranchir des stries radiales sur les portées d'appui des couronnes qui tendent à endommager l'élément d'appui en venant s'y incruster.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique de tranche de la rondelle de blocage selon l'invention ;
- la Figure 2 est une Figure schématique en perspective d'un élément de la rondelle de blocage illustré sur la Figure 1 ;
- la Figure 3 est une Figure schématique en perspective d'un autre élément de la rondelle de blocage illustré sur la Figure 1 ; et,
- la Figure 4 est une vue schématique en élévation de côté d'un ensemble incluant la rondelle de blocage conforme à l'invention dans une position de travail.

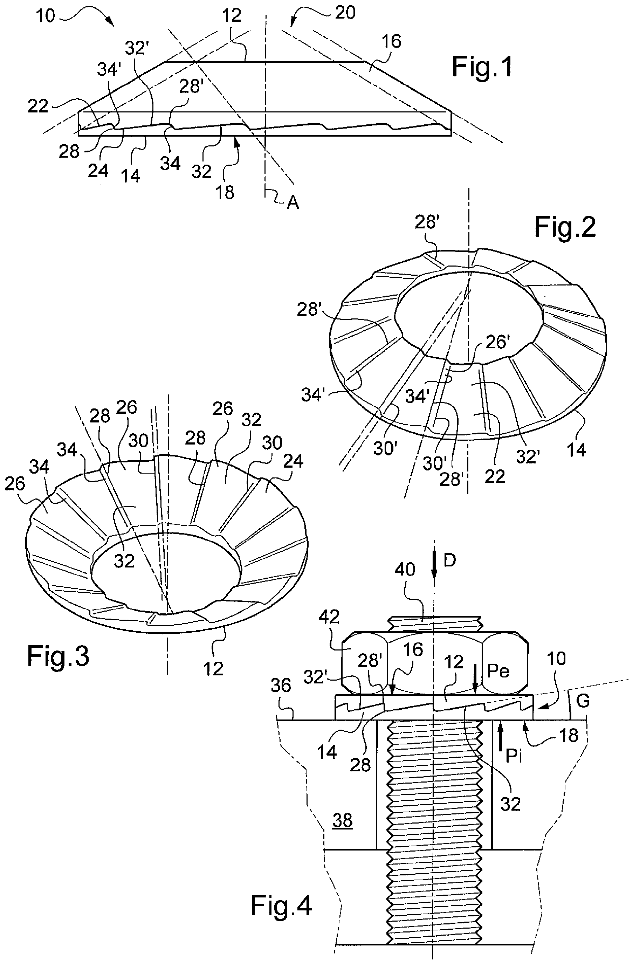

La Figure 1 illustre en vue de tranche, une rondelle de blocage tronconique 10 d'axe de symétrie A. Elle présente une couronne externe 12 et à l'intérieur une couronne interne 14. Les deux couronnes 12, 14 sont engagées l'une dans l'autre ainsi qu'on l'expliquera en détail ci-après. La couronne externe 12 présente une portée d'appui externe 16 et une portée d'appui interne 18 masquée sur la Figure 1, tandis que la rondelle de blocage 10 présente une lumière centrale circulaire 20 permettant d'engager une tige filetée par exemple.

On se référera maintenant alternativement aux Figures 2 et 3. Sur la Figure 2 est représentée la couronne interne 14 vue en perspective de dessus, tandis que sur la Figure 2 apparaît la couronne externe 12 en vue de dessous. La couronne externe 12 définit un premier cône moyen, tandis que la couronne interne 14 définit un second cône moyen. La couronne interne 14 présente une face d'applique convexe 22 tandis que la couronne externe 12 présente une face d'applique concave 24. Ces deux faces d'applique 22, 24 sont complémentaires et sont adaptées à être engagées l'une dans l'autre sans laisser d'espace libre entre les deux couronnes 14, 12. Les deux couronnes 12, 14 sont avantageusement réalisées en acier ressort de manière à être élastiquement déformable selon une direction axiale, entre un état conique et un état plat. Préférentiellement, les couronnes 12, 14 sont forgées à chaud puis ébavurées pour ensuite subir un traitement thermique apte à homogénéiser leurs caractéristiques mécaniques. Elles peuvent également, dans certaines circonstances, être revêtues.

S'agissant de la face d'applique concave 24 de la couronne externe 12 représentée sur la Figure 3, elle présente 15 premières dents radiales asymétriques 26 régulièrement réparties dans la circonférence de la couronne. Ces premières dents radiales asymétriques 26 présentent chacune une première crête 28 qui s'étend radialement et un premier fond de dent 30 écarté angulairement sensiblement de 24° de la première crête 28 et qui s'étend également radialement. Les premières dents radiales asymétriques 26 présentent alors chacune, d'une part un premier flanc de glissement 32 qui s'étend angulairement de manière inclinée entre la première crête 28 et le premier fond de dent 30. Ce premier flanc de glissement 32 de chacune des premières dents radiales asymétriques 26 vient couper le premier cône moyen défini ci-dessus en formant un angle de quelques degrés au niveau de la ligne de coupe, par exemple 5°. Les premières dents radiales asymétriques 26 présentent d'autre part, un premier flanc d'arrêt 34 qui s'étend à l'opposé du premier flanc de glissement 32 par rapport à la première crête 28 et qui rejoint le premier fond de dent 30 de la première dent radiale asymétrique 26 suivante. En revanche, ce premier flanc d'arrêt 34 vient couper le premier cône moyen en formant un angle voisin de 90° par exemple, 95° plus au moins 10°, au niveau de la ligne de coupe. Aussi, le premier flanc d'arrêt 34 s'étend angulairement entre la première crête 28 et le premier fond de dent 30 de la première dent radiale asymétrique 26 suivante, selon le premier cône moyen défini ci-dessus, sur quelques degrés seulement, par exemple deux degrés.

On se reportera à présent sur la Figure 2 où la face d'applique convexe 22 de la couronne interne 14 présente une forme complémentaire à celle de la face d'applique concave 24 de la couronne externe 12. Aussi, ses éléments analogues présenteront la même référence affectée du signe « ' », Ainsi, elle présente 15 secondes dents radiales asymétriques 26' ayant le même profil que les premières dents radiales asymétriques 26, et réparties dans la circonférence. Ces secondes dents 26' présentent chacune une seconde crête 28' qui s'étend radialement et un second fond de dent 30' écarté angulairement d'environ 24° de la seconde crête 28'. Aussi, les secondes dents radiales asymétriques 26' présentent chacune, d'une part un second flanc de glissement 32' qui s'étend angulairement de manière inclinée entre la seconde crête 28' et le second fond de dent 30'. Ce second flanc de glissement 32' de chacune des secondes dents radiales asymétriques 26' vient couper le second cône moyen défini ci-dessus en formant un angle de quelques degrés au niveau de la ligne de coupe, par exemple 5°. Les secondes dents radiales asymétriques 26' présentent d'autre part, un second flanc d'arrêt 34' qui s'étend à l'opposé du second flanc de glissement 32' par rapport à la seconde crête 28' et qui rejoint le second fond de dent 30' de la seconde dent radiale asymétrique 26' suivante. En revanche, ce second flanc d'arrêt 34' vient couper le second cône moyen en formant un angle voisin de 90° au niveau de la ligne de coupe. Aussi, le second flanc d'arrêt 34' s'étend angulairement entre la seconde crête 28' et le second fond de dent 30' de la seconde dent radiale asymétrique 26' suivante, selon le second cône moyen défini ci-dessus, sur quelques degrés seulement, par exemple 2°degrés.

Ainsi, la couronne externe 12 et la couronne interne 14 sont associées, face d'applique convexe 22 contre face d'applique concave 24 comme illustré sur la Figure 1. Aussi, les premier et second flancs de glissement 32, 32' sont respectivement en appui les uns contre les autres, tandis que les premier et second flancs d'arrêt 34, 34' sont respectivement en buttée les uns contre les autres. Les deux faces d'applique 22, 24 étant complémentaires, lorsqu'elles sont associées, il ne subsiste aucun espace libre entre les deux couronnes 12, 14. En revanche, un lubrifiant est avantageusement appliqué sur la face d'applique 22, 24 pour faciliter le mouvement des flancs de glissement 32, 32' les uns contre les autres ainsi qu'on l'expliquera ci-après.

Après que la couronne externe 12 et la couronne interne 14 ont été associées, face d'applique convexe 22 contre face d'applique concave 24, et que la rondelle de blocage ainsi formée est mise en prise entre un élément vissable et un élément d'appui, la rotation de l'élément vissable provoque la déformation axiale en phase des deux couronnes 12, 14, tandis qu'elles sont bloquées en rotation l'une par rapport à l'autre grâce aux flancs d'arrêt 34, 34' des dents 26, 26' respectivement en butée les uns contre les autres. De la sorte, les dents 26, 26' des deux couronnes 12, 14 demeurent en prise durant la déformation. Aussi, ces dents 26, 26' ne s'endommagent pas durant la déformation à plat de la rondelle de blocage.

La rondelle de blocage tronconiques 10 que l'on retrouve illustrée sur la Figure 4 est aplatie et elle est ajustée contre la surface d'appui 36 d'un élément d'appui 38 et est traversée par une tige filetée 40 pour être prise en étau entre un écrou 42 vissé sur la tige 40. Ainsi, tant la couronne externe 12 que la couronne interne 14 sont aplaties entre l'écrou 42 vissé et serré et la surface d'appui 36. Par conséquent, la rondelle de blocage tronconique 10 est élastiquement comprimée entre écrou 42 et surface d'appui 36. On observera que vu de dessus selon la flèche D, l'écrou 42 a été entraîné en rotation dans le sens horaire pour pouvoir s'appuyer sur la portée d'appui externe 16 de la couronne externe 12 et déformer élastiquement ensemble les couronnes 12, 14 formant la rondelle de blocage tronconique 10 avant de l'aplatir.

Dès après le serrage, les couronnes 12, 13, appliquées l'une contre l'autre sont maintenues comprimées sous pression axiale entre l'écrou 42 et la surface d'appui 36. L'écrou 42 exerce alors sur la portée d'appui externe 16 de la couronne externe 12 une pression externe Pe donnée équivalant à la pression interne Pi exercée par la surface d'appui 36 sur la portée d'appui interne 18 de la couronne interne 14. On notera que cette pression résulte à la fois du serrage de l'écrou 42 et aussi surtout du retour élastique de la rondelle de blocage tronconique 10.

Ainsi, dans cette situation, lorsque l'ensemble vissé illustré sur la Figure 4 subit des vibrations par exemple, l'écrou 42 tend à se dévisser dans le sens anti-horaire. Compte tenu des pressions qui s'exercent entre les portées d'appui 16, 18, et respectivement l'écrou 42 et la surface d'appui 36, lorsque l'écrou 42 tend à se dévisser dans le sens anti-horaire, les efforts de frottement sont si importants, que la couronne externe 12 vient en prise avec l'écrou 42, tandis que la couronne interne 14 est en prise avec la surface d'appui 36 si bien que la couronne externe 12 est entraînée en rotation avec l'écrou 42 tandis que la couronne interne 14 demeure en position fixe. Aussi, les deux couronnes 12, 14 s'écartent axialement l'une de l'autre puisque les flancs de glissement 32, de la face d'applique interne 24 sont entraînés en glissement contre les flancs de glissement 32' de la face d'applique externe 22 en formant rampe. Ce frottement est facilité par le lubrifiant. L'angle G des flancs de glissement 32, 32', lequel correspond à l'angle de plus grande pente par rapport au plan moyen de la rondelle de blocage 10, étant supérieur à l'angle d'hélice de la tige filetée 40 par rapport à sa section droite, la couronne externe 12 forme alors coin durant le mouvement de rotation de l'écrou 42 et ainsi le bloque instantanément. Par conséquent le desserrage de l'écrou 42 est rapidement interrompu.

En revanche, lorsque par exemple la tige filetée 40 se dilate sous l'effet de la température, ou bien pour tout autre raison, et que l'écrou 42 et la surface d'appui 36 de l'élément d'appui 38 s'écarte axialement l'un de l'autre. Alors, la rondelle de blocage tronconique 10 tend à revenir vers sa forme initiale tronconique. De la sorte, les pressions externe Pe et interne Pi qui s'exercent respectivement entre la portée d'appui externe 16 de la couronne externe 12 et l'écrou 42 d'une part, et entre la surface d'appui 36 et la portée d'appui interne 18 d'autre part, sont conservées dans une certaine mesure et demeurent sensiblement constantes. De la sorte, le desserrage intempestif de l'écrou 42 est toujours apte à provoquer l'entraînement en rotation de la couronne externe 12 par rapport à la couronne interne 14 et partant, le blocage de l'écrou 42 en rotation grâce aux mêmes effets que ceux précités.

Bien évidemment, une telle rondelle de blocage tronconique 10 peut également être ajustée entre une tête de vis et un support d'appui quelconque pour produire les mêmes effets de blocage. Car en effet, c'est la tension qui s'exerce dans la tige de vis qui génère alors des frottements importants dans le système vis/écrou et qui le freine lorsque l'un est entraîné en rotation par rapport à l'autre.

Par ailleurs, il est à noter que le nombre de dents radiales asymétriques n'est pas ici limitatif. Bien évidemment, des couronnes comportant six dents par exemple ou bien encore vingt dents pourraient tout à fait convenir.

## Revendications

1. Rondelle de blocage (10) destinée à être comprimée axialement entre un élément d'appui (38) et un élément vissable (42), ledit élément vissable étant relié audit élément d'appui (38) par une tige (40) apte à traverser ladite rondelle de blocage (10), ladite rondelle de blocage comprenant deux couronnes (12, 14) présentant chacune une portée d'appui dépourvue des stries radiales et une face d'applique (24, 22), ladite face d'applique présentant une pluralité de dents radiales asymétriques (26, 26'), chacune desdites dents radiales asymétriques présentant, d'une part une crête (28, 28') et un fond de dent (30, 30') espacé angulairement de ladite crête, et d'autre part un flanc de glissement (32, 32') incliné étendu angulairement entre ladite crête (28, 28') et ledit fond de dent (30, 30'), les faces d'applique (24, 22) desdites couronnes étant aptes à être appliquées l'une contre l'autre, tandis que lesdits flancs de glissement (32, 32') viennent respectivement en contact les uns contre les autres, lesdites couronnes (12, 14) appliquées l'une contre l'autre et maintenues comprimées sous pression axiale entre ledit élément vissable (42) et ledit élément d'appui (38) étant aptes à venir respectivement en prise en rotation avec ledit élément vissable (42) et ledit élément d'appui (38), lorsque ledit élément vissable se dévisse, de manière à entraîner en rotation lesdites couronnes (12, 14) l'une par rapport à l'autre, tandis que lesdits flancs (32, 32') sont respectivement entraînés en glissement les uns contre les autres en formant rampe de manière à écarter axialement lesdites couronnes l'une de l'autre pour provoquer le blocage en rotation dudit élément vissable (42) ; ladite rondelle de blocage (10) présentant une forme tronconique, et ladite rondelle de blocage (10) étant élastiquement déformable de façon à pouvoir être déformée à plat en formant ressort entre ledit élément d'appui (38) et ledit élément vissable (42) de manière à maintenir ladite pression axiale sensiblement constante, par quoi lesdites couronnes (12, 14) sont aptes à être entraînées en rotation l'une par rapport à l'autre lorsque ledit élément d'appui (38) et ledit élément vissable (42) s'écartent axialement l'un de l'autre, dans laquelle chacune desdites dents radiales asymétriques (26, 26') présente en outre un flanc d'arrêt opposé (34, 34') audit flanc de glissement (32, 32') par rapport à ladite crête (28, 28'), et lesdits flancs d'arrêt (34, 34') desdites dents radiales asymétriques desdites faces d'applique viennent respectivement en contact les uns contre les autres lorsque lesdites faces d'applique (24, 22) desdites couronnes sont appliquées l'une contre l'autre, **caractérisé en ce que** lesdites couronnes (12, 14) présentant des plans axiaux coupant les dents radiales asymétriques (26, 26') selon ladite crête (28, 28'), lesdits flancs d'arrêt (34, 34') sont sensiblement inclinés par rapport auxdits plans axiaux et **en ce que** lesdites faces d'applique sont traitées pour diminuer les forces de frottement entre lesdits flancs de glissement (32,32').

2. Rondelle de blocage selon la revendication 1, **caractérisée en ce que** lesdites dents radiales asymétriques (26, 26') des faces d'applique (24, 22) de chacune desdites couronnes (12, 14) présentent un profil identique.

3. Rondelle de blocage selon la revendication 1, **caractérisée en ce que** lesdits flancs d'arrêt (34, 34') et lesdits flancs de glissement (32, 32') se rejoignent selon une ligne d'intersection qui s'étend radialement.

4. Rondelle de blocage selon l'une quelconque des revendications 1 à 3, **caractérisée en ce que** lesdites couronnes (12, 14) présentant des plans axiaux coupant les dents radiales asymétriques (26, 26') selon ladite crête (28, 28') et des plans perpendiculaires coupant lesdits plans axiaux perpendiculairement selon ladite crête, lesdits flancs de glissement (32, 32') sont sensiblement inclinés par rapport auxdits plans perpendiculaires.

5. Rondelle de blocage selon l'une quelconque des revendications 1 à 4, **caractérisée en ce que** la face d'applique (22, 24) de chacune desdites couronnes (14, 12) présente entre dix et vingt dents radiales asymétriques (26, 26').

6. Rondelle de blocage selon l'une quelconque des revendications 1 à 5, **caractérisée en ce que** l'une desdites couronnes (12, 14) présente une face d'applique (24) convexe, tandis que l'autre desdites couronnes présente une face d'applique concave (22).

7. Rondelle de blocage selon l'une quelconque des revendications 1 à 6, **caractérisée en ce que** lesdites couronnes (12, 14) sont formées dans un acier à ressort.

8. Rondelle de blocage selon la revendication 1, dans laquelle le traitement des faces d'applique est un traitement physique.

9. Rondelle de blocage selon la revendication 1, dans laquelle le traitement des faces d'applique est un traitement chimique.

10. Rondelle de blocage selon la revendication 1, dans laquelle le les faces d'applique sont mises en œuvres d'un revêtement.

## Patentansprüche

1. Sicherungsscheibe (10), die dazu bestimmt ist, axial zwischen einem Stützelement (38) und einem schraubbaren Element (42) komprimiert zu werden, wobei das schraubbare Element durch eine Stange (40) mit dem Stützelement (38) verbunden ist, die in der Lage ist, die Sicherungsscheibe (10) zu durchqueren, die Sicherungsscheibe umfassend zwei Ringe (12, 14), die jeweils eine Auflagefläche frei von radialen Rillen und eine Anlagefläche (24, 22) aufweisen, wobei die Anlagefläche eine Vielzahl von asymmetrischen radialen Zähnen (26, 26') aufweist, wobei jeder der asymmetrischen radialen Zähne einerseits einen Scheitel (28, 28') und einen Zahnboden (30, 30'), der winklig von dem Scheitel beabstandet ist, und andererseits eine geneigte Gleitflanke (32, 32'), die sich winklig zwischen dem Scheitel (28, 28') und dem Zahnboden (30, 30') erstreckt, aufweist, wobei die Anlageflächen (24, 22) der Ringe gegeneinander angelegt werden können, während die Gleitflanken (32, 32') jeweils miteinander in Kontakt kommen, wobei die Ringe (12, 14) die gegeneinander angelegt und unter axialem Druck zwischen dem schraubbaren Element (42) und dem Stützelement (38) komprimiert gehalten werden, in der Lage sind, dass sie jeweils in Dreheingriff mit dem schraubbaren Element (42) und dem Stützelement (38) zu kommen, wenn das schraubbare Element abgeschraubt wird, um die Ringe (12, 14) in Bezug aufeinander in Drehung zu versetzen, während die Flanken (32, 32') jeweils gleitend gegeneinander getrieben werden und eine Rampe bilden, sodass die Ringe axial voneinander weg bewegt werden, um eine Blockierung der Drehung des schraubbaren Elements (42) hervorzurufen;
wobei die Sicherungsscheibe (10) eine kegelstumpfförmige Form aufweist und die Sicherungsscheibe (10) elastisch verformbar ist, so dass sie flach verformbar ist und eine Feder zwischen dem Stützelement (38) und dem schraubbaren Element (42) bildet, um den axialen Druck im Wesentlichen konstant zu halten, wodurch die Ringe (12, 14) in der Lage sind, jeweils in Bezug aufeinander in Drehung versetzt zu werden, wenn sich das Stützelement (38) und das schraubbare Element (42) axial voneinander weg bewegen, wobei jeder der radialen asymmetrischen Zähne (26, 26') ferner eine gegenüberliegende Anschlagflanke (34, 34') an der Gleitflanke (32, 32') in Bezug auf den Scheitel (28, 28') und die Anschlagflanken (34, 34') aufweist, wobei die radialen asymmetrischen Zähne der Anlageflächen jeweils in Kontakt miteinander kommen, wenn die Anlageflächen (24, 22) der Ringe aneinander anliegen, **dadurch gekennzeichnet, dass** die Ringe (12, 14) axiale Ebenen aufweisen, die die radialen asymmetrischen Zähne (26, 26') entlang des Scheitels (28, 28') schneiden, wobei die Anschlagflanken (34, 34') im Wesentlichen in Bezug auf die axialen Ebenen geneigt sind, und dass die Anschlagflächen behandelt sind, um die Reibungskräfte zwischen den Gleitflanken (32, 32') zu verringern.

2. Sicherungsscheibe nach Anspruch 1, **dadurch gekennzeichnet, dass** die radialen asymmetrischen Zähne (26, 26') der Anschlagflächen (24, 22) von jedem der Ringe (12, 14) ein identisches Profil aufweisen.

3. Sicherungsscheibe nach Anspruch 1, **dadurch gekennzeichnet, dass** sich die Anschlagflanken (34, 34') und die Gleitflanken (32, 32') entlang einer Schnittlinie treffen, die radial verläuft.

4. Sicherungsscheibe nach einem der Ansprüche 1 bis 3, **dadurch gekennzeichnet, dass** die Ringe (12, 14) axiale Ebenen aufweisen, die die radialen asymmetrischen Zähne (26, 26') entlang des Scheitels (28, 28') schneiden, und senkrechte Ebenen, die die axialen Ebenen senkrecht entlang des Scheitels schneiden, wobei die Gleitflanken (32, 32') im Wesentlichen in Bezug auf die senkrechten Ebenen geneigt sind.

5. Sicherungsscheibe nach einem der Ansprüche 1 bis 4, **dadurch gekennzeichnet, dass** die Anlagefläche (22, 24) von jedem der Ringe (14, 12) zwischen zehn und zwanzig radiale asymmetrische Zähne (26, 26') aufweist.

6. Sicherungsscheibe nach einem der Ansprüche 1 bis 5, **dadurch gekennzeichnet, dass** der eine der Ringe (12, 14) eine konvexe Anlagefläche (24) aufweist, während der andere der Ringe eine konkave Anlagefläche (22) aufweist.

7. Sicherungsscheibe nach einem der Ansprüche 1 bis 6, **dadurch gekennzeichnet, dass** die Ringe (12, 14) aus einem Federstahl gebildet sind.

8. Sicherungsscheibe nach Anspruch 1, wobei die Behandlung der Anlageflächen eine physikalische Behandlung ist.

9. Sicherungsscheibe nach Anspruch 1, wobei die Behandlung der Anlageflächen eine chemische Behandlung ist.

10. Sicherungsscheibe nach Anspruch 1, wobei die Anlageflächen über eine Beschichtung verfügen.

## Claims

1. A locking washer (10) intended for being compressed axially between a bearing element (38) and a screwable element (42), said screwable element being connected to said bearing element (38) by a shank member (40) suitable for traversing said locking washer (10), wherein said locking washer comprises two washer crowns (12, 14) having each a range of bearing without radial grooves and an engagement face (24, 22), said engagement face having a plurality of asymmetrical radial teeth (26, 26'), each of said radial asymmetrical teeth having, on the one hand, a crest (28, 28') and a tooth bottom (30, 30') spaced angularly from said crest, and, on the other hand, a sliding side (32, 32') inclined extending angularly between said crest (28, 28') and said tooth bottom (30, 30'), and wherein said engagement faces (24, 22) of said washer crowns are suitable for being applied against each other, whereas the sliding sides (32, 32') come into contact with each other, respectively, said washer crowns (12, 14), which are applied against each other and maintained compressed under axial pressure between the screwable element (42) and the bearing element (38), respectively, being suitable for being brought into rotation with the screwable element (42) and the bearing element (38), respectively, when the screwable element loosens, with a view to bringing the washer crowns (12, 14) into rotation relative to each other, whereas the respective sliding sides (32, 32') are brought along slidingly against each other while forming a ramp to separate the washer crowns axially from each other to bring about the locking against rotation of the screwable element (42) ;
said locking washer (10) presenting
- a shape of a truncated cone, and
- that said locking washer (10) being elastically deformable in order to be able to be flattened, forming a spring between said bearing element (38) and said screwable element (42) to maintain said axial pressure substantially constant, whereby said washer crowns (12, 14) are suitable for being brought along in rotation relative to one another when said bearing element (38) and said screwable element (42) are separated axially from each other,
- wherein each of the asymmetrical radial teeth (26, 26') also has a stop side (34, 34') opposite said sliding face (32, 32') relative to said crest (28, 28'), and
- said stop sides (34, 34') of said asymmetrical radial teeth of said engagement faces come into contact with each other, respectively, when said engagement faces (24, 22) of said washer crowns are applied against each other,
**characterized in that** said washer crowns (12, 14) having axial planes intersecting the asymmetrical radial teeth (26, 26') according to said crest (28, 28'), the stop sides (34, 34') are substantially inclined relative to the axial planes, and **in that** said engagement faces are treated to reduce the friction forces between said sliding faces (32, 32').

2. A locking washer according to claim 1, **characterized in that** the asymmetrical radial teeth (26, 26') of the engagement faces (24, 22) of each of the washer crowns (12, 14) have an identical profile.

3. A locking washer according to claim 1, **characterized in that** the stop sides (34, 34') and the sliding sides (32, 32') join along an intersection line that extends radially.

4. A locking washer according to any of the claims 1 to 3, **characterized in that** said washer crowns (12, 14) having axial planes intersecting the asymmetrical radial teeth (26, 26') according to said crest (28, 28') and perpendicular planes intersecting the axial planes perpendicularly according to said crest, said sliding sides (32, 32') are substantially inclined relative to said perpendicular planes.

5. A locking washer according to any of the claims 1 to 4, **characterized in that** the engagement face (22, 24) of each of said washer crowns (14, 12) has between ten and twenty asymmetrical radial teeth (26, 26').

6. A locking washer according to any of the claims 1 to 5, **characterized in that** one of said washer crowns (12, 14) has a convex engagement face (24), whereas the other one of the washer crowns has a concave engagement face (22).

7. A locking washer according to any of the claims 1 to 6, **characterized in that** said washer crowns (12, 14) are made from a spring steel.

8. A locking washer according to claim 1, wherein the treatment of the engagement faces is a physical treatment.

9. A locking washer according to claim 1, wherein the treatment of the engagement faces is a chemical treatment.

10. A locking washer according to claim 1, wherein the engagement faces are implemented of a coating.
